# EUROPEAN PATENT APPLICATION

(11) **EP 4 008 920 A1**
(43) Date of publication of application: **08.06.2022**
(21) Application number: 20211400.5
(22) Date of filing: 03.12.2020
(51) Int. Cl.: F16D 1/08, F16D 43/286, F16D 9/06

(54) **TORQUE LIMITING COUPLING**

(71) Applicant: Voith Patent GmbH, 89522 Heidenheim (DE)
(72) Inventor: Westberg, Hakan, Hudiksvall (SE); Jacobs, Mikael, 82064 Näsviken (SE); ERICSSON, Robert, 82060 Delsbo (SE)
(74) Representative: Voith Patent GmbH - Patentabteilung

(57) **Abstract**

The invention is directed on a torque limiting coupling (7) for a driveline (1) comprising a fluid chamber (27) within a twin walled sleeve (23) to provide a fictional engagement to a shaft (11). A shear-off tube (37) is in fluid connection to the fluid chamber (27) and is assigned to a shear-off gate (45). The shear off gate is fixedly connected to the shaft to open the fluid chamber (27) by shearing the shear-off tube (37) with the shear off gate (45). At least a first shear-off tube (37) and second shear-off tube (37) are arranged for closure of the fluid chamber (27) and for interaction with shear-off gate (45). The shear-off gate (45) provides at least one cut-off edge (51, 53), wherein at a position of blockage (38) of one of the shear-off tubes (37) by one cut-off edge (51, 53), the other shear-off tube (37) is positioned at an unblocked position.

## Description

### TECHNICAL FIELD OF THE INVENTION

The present invention relates to a torque limiting coupling. The torque limiting coupling is used to connect a first rotatable shaft with a second rotatable shaft. The first rotatable shaft can be driven by a power unit also named motor. The second shaft is connected with a load. In an overload situation the connection of the first shaft and the second shaft is slipping and/or disconnected. As a torque limiting coupling a safety coupling can be used.

Especially torque limiting couplings comprise a release mechanism. Such torque limiting couplings are often named safety coupling. An example of such a coupling is disclosed by US 10,767,711. This kind of torque limiting coupling allows slipping over a predetermined range before a disengagement by the release mechanism is activated. The disclosed safety coupling comprises a driving coupling member and a driven coupling member. The driven coupling member and the driving coupling member are engaged by a frictional connection. The coupling further comprise a release element. The release element comprising a centrifugal device is configured to release said frictional connection between said driving coupling member and said driven coupling member under respect of the rotational speed and the slip between the driving coupling member and driven coupling member. Because of the complexity of such mechanism, such safety coupling are very expensive.

US 2009/0264253 A1 discloses a clutch control system interposed between an engine and a piece of driven equipment. The clutch control system includes a clutch assembly with input and output speed sensors for providing signals corresponding to the shaft rotational speeds of the engine and the driven equipment, respectively. A pressure sensor is connected to the clutch assembly and provides an output signal corresponding to clutch pressure. A temperature sensor is also associated with the clutch assembly and provides a temperature signal corresponding to the operating temperature of the clutch assembly. Transducers of various types are also employed to sense operating conditions such as shock loads or the like. Also included is a machine control system connected to the driven equipment and an engine control module connected to the engine. These signals are passed to a clutch control unit that employs the signals to assess the operating conditions of the system and accordingly adjust the clutch pressure through a pressure control valve. A vast array of operating data is available from the system and is employed by the clutch control unit to ensure optimum operation, by tailoring the clutch pressure to the engine and driven equipment, thus minimizing clutch slippage and avoiding or instantaneously correcting shock load situations. The slipping of the clutch is determined in revolution per minute (rpm).

WO 2007/085861 discloses a method of calculating the difference in relative rotational speeds of an input and an output shaft.

EP 3228895 A1 is directed on a torque limiting coupling for a driveline. An input side of the torque limiting coupling is connectable to a power unit and an output side is connectable to a load. A first speed sensor is assigned to the input side and a second speed sensor is assigned to the output side of the torque limiting coupling. The sensors comprises encoders and detectors. The encoders comprises a lot of markings to provide a precise detection of a slip event. Thereby it is possible to detect small slip events in the range of millimeters in circumferential direction. Further it is also possible to detect the direction of slip.

It is an object of the invention to provide torque limiting coupling with a release mechanism, wherein the cost are reduced.

It is further an object of the invention to provide a method of usage of a torque limiting coupling, wherein the method allows a release of the torque limiting coupling in a comfortable and useful way.

The torque limiting coupling of the invention comprises a fluid chamber within a twin walled sleeve. By pressurizing of the twin walled sleeve a fictional engagement to a shaft can be provided. In most cases the twin walled sleeve is arranged in a hollow sleeve arranged coaxial to the shaft, but it is also possible to have the twin wall sleeve radial inside of the shaft, wherein the shaft is arranged coaxial to the twin walled sleeve and radial outside to the twin wall sleeve.

For pressurizing of the fluid chamber a first shear-off tube and another shear-off tube are in fluid connection to the fluid chamber. A shear-off gate is fixedly connected to the shaft. The shear-off gate provides at least one shear-off edge. At position of blockage of one of the shear-off tubes by the at least one shear-off edge, the other shear-off tube is positioned at an unblocked position in respect of the shear-off gate. Thereby it is possible to depressurize the fluid chamber over the unblocked shear-off tube. Thereby a shearing off of the blocked shear-off tube is not needed because at least one of the shear-off tubes are operable for pressurization or depressurization of the fluid chamber. In case of defect resulting in a slippage, all shear-off tubes can be sheared-off to provide immediate depressurization of the fluid chamber and thereby disconnect the twin walled sleeve and the shaft rapidly. In the case of a defect of one of the shear-off tubes at least the further shear-off tube will be sheared-off for depressurization. So the torque limiting coupling is very secure. By providing always an unblocked shear-off tube a comfortable handling is provided. It is also possible to depressurize the torque limiting coupling to reset the torque limiting coupling in a predefined position. Thereby the functionality is enhanced.

In a preferred embodiment the shear-off gate comprises at least one cut out. The cut-out provides a first cut-off edge for release of the torque limiting coupling in case of slipping in clockwise direction and a second cut-off edge for release of the torque limiting coupling in the case of slipping in anti-clockwise direction. The direction clockwise and anto-clockwise is determined in determined in direction of torque transmission. Every cut-off edge is assigned to at least one shear off tube. The assigned shear-off tube is the shear-off tube sheared-off in case of slippage by that shear-off edge first. It is possible that one shear-off tube is assigned to a first and a second shear-off edge. Further it is possible that a first shear-off tube is assigned to the first shear-off edge and another shear-off tube is assigned to the second shear-off edge. By the first and second shear off edge it is possible to provide a torque limiting coupling sensitive for slipping in both directions. If one of the shear-off tubes are blocked by a shear-off edge, at least one shear-off tube is unblocked.

In a further embodiment the shear off gate comprises a first cut out and a second cut out, wherein the first cut out is provided for arrangement of the first shear-off tube within the cut-out and the second cut-out is provided for arrangement of the second shear-off tube within the second cut out. Thereby there is an unambiguous assignment of shear-off tube and shear-off gate.

By the arrangement of the shear-off tubes within the cut-outs and by the dimensions of the cut-outs and the position of the shear-off tubes within the cut outs or in respect of the shear-off edges, it is possible to adjust the torque limiting coupling to the use case in a very simply way. Further it is possible to provide an allowed slipping angle without release of the torque limiting coupling. By the possibility of a release using the unblocked shear-off tube, a readjustment of the torque limiting coupling can be provided in a very comfortable way.

Because of fluid flow a symmetric arrangement of the shear-off tubes is a preferred solution. Only by adaption of the shear-off gate the torque limiting coupling can be adjusted to a lot of use cases in a very simple way.

In the case of with one cut out and at least two shear-off tubes arranged therein, it is preferred to arranged shear-off tubes with an distance in circumferential direction. In a preferred embodiment the shear-off tubes are arranged close to each other in circumferential direction to provide a maximized allowed slipping angle without release.

In a further embodiment the first and the second shear-off edge of one cut out of the shear-off gate are arranged at an angle position of at least 10 degrees, preferably of at least 45 degrees. Most preferred of at least 90° to provide a large allowed slipping angle without release.

In a preferred embodiment the first and second shear-off tube are connected to at least one pump connection seat, wherein the pump connection seat is arranged in an axial distance within the thin walled sleeve to be axial outside of the shear off gate. Thereby the pump connection seat is always available independent of the position of the shear-off gate.

In one embodiment the a pump connection seat is arranged on the far side of the shear-off tube in respect of the shear of edge of the shifting gate. Thereby the pump connection seat is available in the case of an unblocked position of the shear-off tube.

In a preferred embodiment the torque limiting coupling comprises a sensor system to provide information about the slip events in the range of degrees and preferable to provide the sum of slip angle in one direction. Thereby it is possible to trigger a service to reseat the torque limiting coupling and to avoid a release of the torque limiting coupling.

Service method of a torque limiting coupling of the invention, wherein for an adjustment of the pressure or an exchange of fluid of the fluid chamber the unblocked shear-off tube is loosed for providing a fluid connection to the fluid chamber. Preferable the fluid connection is provided from the fluid camber to the pump connection seat, wherein for providing the connection the shear-off tube is loosed. Therefor it is important that at least one shear off tube is in an unblocked position.

In general it would be possible to have a separate pump connection seat which can be opened independent from the shear-off tube. But such a pump connection seat would generate addition costs.

### BRIEF DESCRIPTION OF THE DRAWINGS

The invention, together with objects and advantages thereof, may best be understood by reference to the following description of the present preferred embodiments together with the accompanying drawings. The scope of this invention is not limited by these embodiments.
- Fig.1:: Torque limiting coupling
- Fig.2:: Torque limiting coupling of figure 1 in exploration view
- Fig.3:: Sectional representation of the torque limiting coupling of figure 1
- Fig. 4:: Shear off gate
- Fig. 5:: Torque limiting coupling with angle shifted shear off gate
- Fig. 6:: Shear off gate of Fig. 5
- Fig. 7:: Schematic drawing of shear off gate with one cut out and two shear off
- Fig. 8:: Driveline
- Fig. 9:: Torque limiting coupling with lamella coupling
- Fig. 10:: Torque limiting coupling between two gear halves
- Fig. 11:: Torque limiting coupling with flexible coupling

### DETAILED DESCRIPTION OF THE PREFFERED EMBODIMENTS

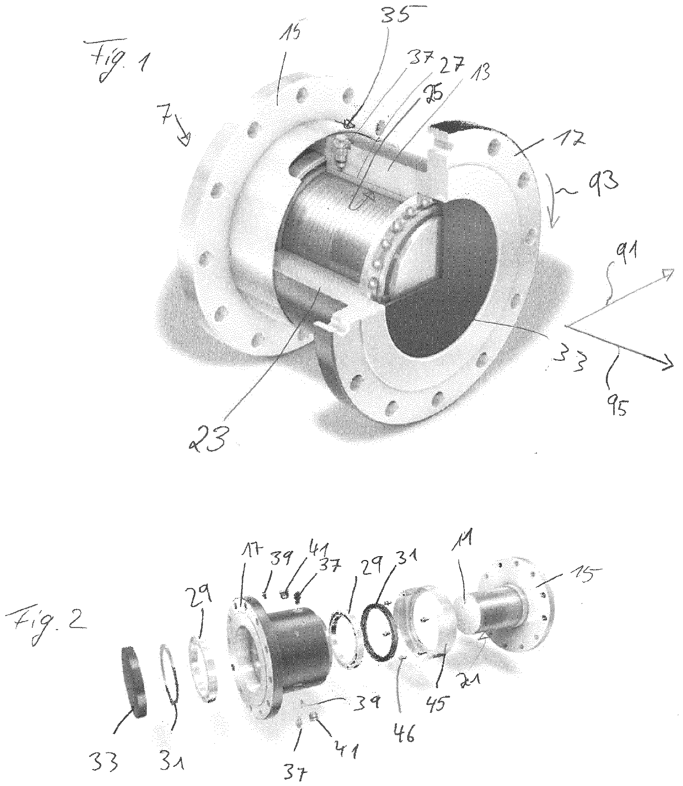

Figure 1 and 2 shows a torque limiting coupling 7. A flange 15 is arranged on the input side for connection with a power unit 3. On the other axial end of the torque limiting coupling 7 there is a flange 17 for connection to a load 5. In the shown arrangement the flange 15 is fixedly connected to a shaft 11. The shaft 11 comprises a frictional surface 21 on its circumferential outer surface. This frictional surface 21 is faced to a frictional surface 25 of a coaxial arranged hollow shaft 13. This frictional surface 25 is arranged on an inner surface of the hollow shaft 13. The hollow shaft 13 is arranged coaxial to the shaft 11. For providing frictional engagement of the hollow shaft 13 with shaft 11 a fluid chamber 27 is provided. The fluid chamber is a closed loop in circumferential direction and extends in axial direction. In dependents of the pressure the fluid chamber 27 the fluid chamber expands in radial direction. Thereby a frictional engagement of the frictional surface 21 of the shaft with the frictional surface 25 of the hollow 13 is adjustable. In this embodiment the fluid chamber 27 is arranged in the hollow shaft 13. But it is also possible to arranged such a fluid chamber in a radial inside arranged shaft as disclosed for example by DE 40 28 158 A1.

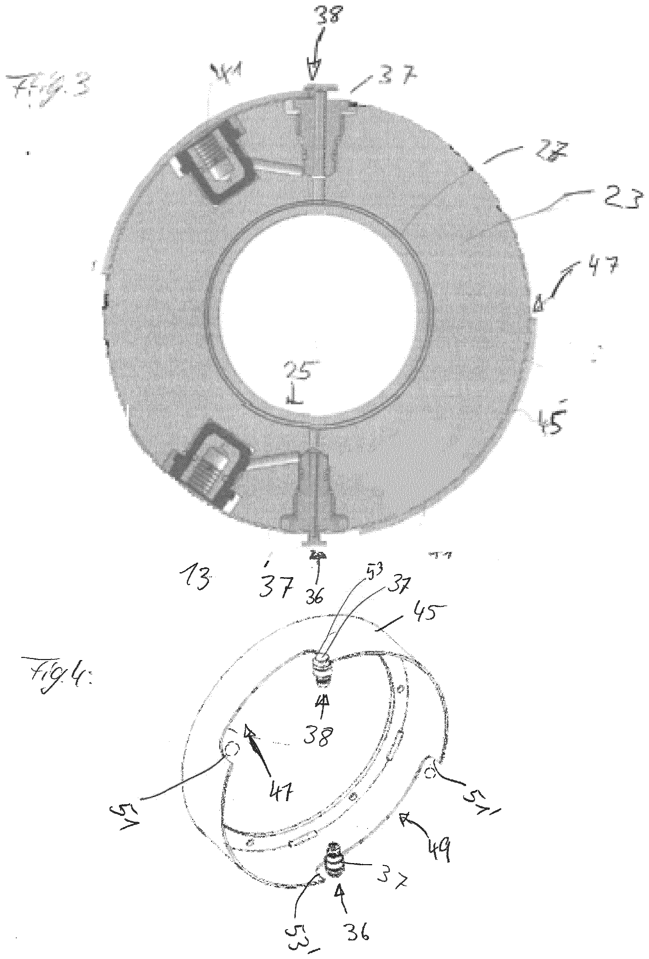

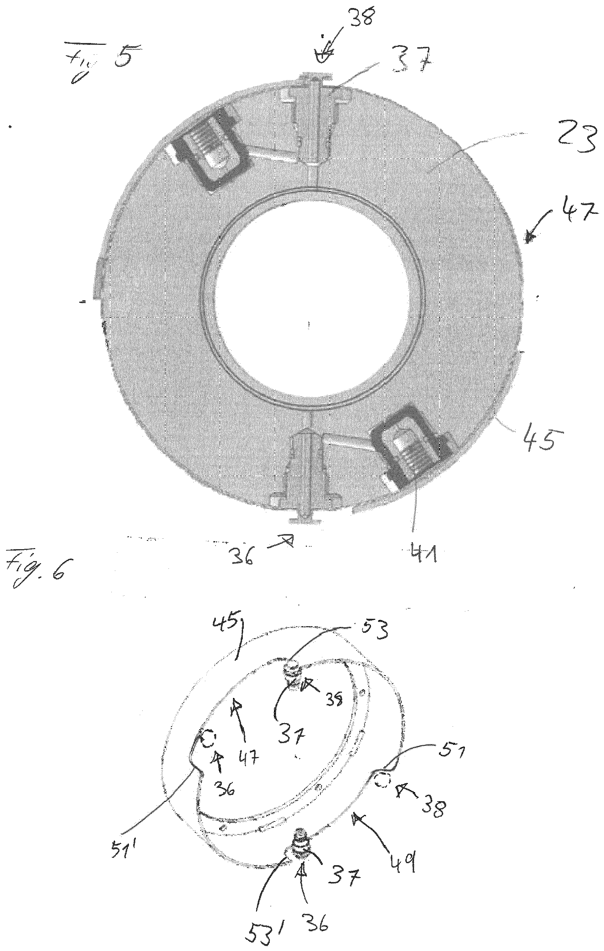

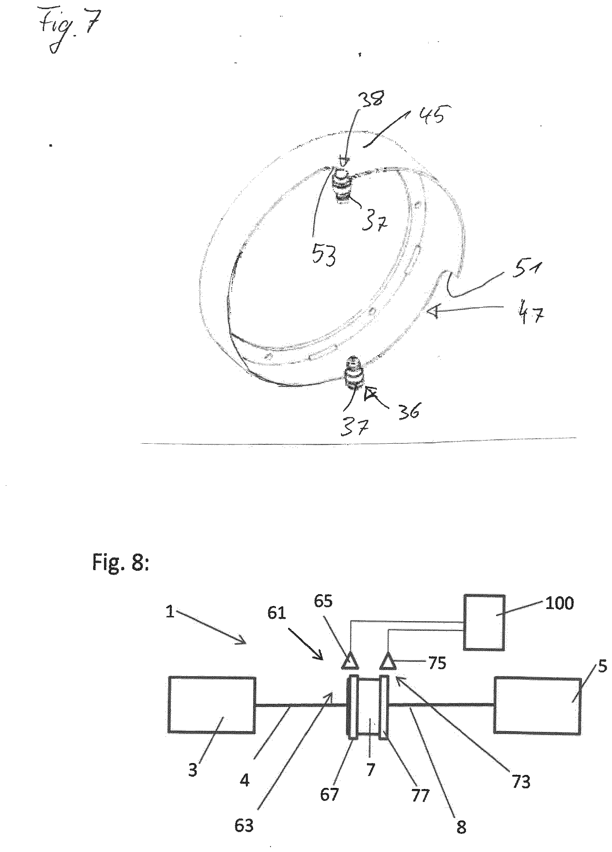

In the shown embodiment the fluid chamber is part of a twin walled sleeve 23. For pressurization a pump connection seat 41 and a shear-off tube is provided. For pressurization a pump is connected with the pump connection seat. The shear-off tube 37 is screwed into twin walled sleeve 23 into a predetermined position for pressurization. Thereby a direct fluid connection of the fluid chamber 27 to the outside is closed. But a fluid connection to the pump is still available. Thereby a depressurization and a pressurization is possible. After pressurization the shear-off tube is screw in an end position wherein the connection to the pump connection seat 41 is closed. A bearing of the hollow shaft 13 on the shaft 11 is provided by two bearings 29. The bearings are sealed by the sealing 31 and a lubrication of the bearings is possible by the lubrication connector 39. A cap 33 is arranged to close the hollow shaft 13 at the side of the flange 17. For interaction with a shear-off tube 37 a shear-off gate 45 is arranged coaxial to the twin walled sleeve 23 at axial height of the shear off tube. The shear off gate 45 and the shear-off tube 37 provides a release mechanism 35. Here the shear-off gate is fixedly connected to the shaft 11 of the flange 15 by screws 46. The shear of gate comprises at least on cut out, as shown in figure 7. In the embodiment of figure 3 and 4 the shear-off gate comprises a first cut out 47 and a second cut out 49. A further embodiment with a shear-off gate comprising a fist cut out 47 and a second cut out 49 is disclosed by figure 5 and 6. The embodiments of F figures 3 to 6 shows solutions with two shear-off tubes. But it is also possible to have more shear off tubes distributed in circumferential direction in adaption to the use case. By choosing two shear-off tubes a large slip angle without release of the torque limiting coupling can be provided. Slip angle of more than 90° are possible before release of the torque limiting coupling. The axial direction is signed by 95 and fits with the rotational axis. The radial direction is signed with ref. 91 in figure 1 and the circumferential direction is signed with ref. 93.

Figure 3 and 4 shows an embodiment wherein the first cut out 47 has a smaller dimension in circumferential direction then the second cut out 49. There the one shear-off tube in the first cut-out will always be sheared off first. As shown in figure 3, one of the shear of tubes 37 is on a blocked position 38, wherein unscrewing of the shear-off tube 37 is not possible. The other shear-off tube 37 is in an unblocked position 36. Thereby it is possible to unscrew the unblocked shear-off tube. The fluid chamber can be depressurized without the need of shear-off of one of the shear-off tubes. With a depressurized fluid chamber a readjustment of the torque limiting coupling is possible. Further an adaption of the fluid pressure is possible by the use of the unblocked shear-off tube 36.

In the case of a serious defect, first the shear-off tube reaching the blocked position first is shear-off. Afterwards the second shear off tube will be sheared off. If one of the shear-off tube is defect and no fluid is able to disappear by the defect shear off tube, a disconnection is provided by the further shear-off tube.

Figure 5 and 6 discloses an embodiment with a shear-off gate 45 with a first cut-out 47 and a second cut-out 49 of equal extension in circumferential direction. In every cut out a shear-off tube is arranged. By the position of the first 47 and second cut out 49 in respect of the position of the shear of tubes 37 it is realized that in a blocked position of the shear-off tube in the first cut out, the shear off tube in the second cut out is in an unblocked position and vice versa.

The shear off tubes are opened by shearing off the shear off tube by the first shear off edge 51 or the second shear off edge 53 in dependence of the slip direction. The shear off edge 51', 53' are shearing off a shear off tube at a later point in time.

The pump connection seat is arranged on the far side of the shear-off edge within the cut out of the shear-off gate. But it is also possible to arrange the pump connection seat at an axial distance from the shear off tube and wherein the pump connection seat 41 is out of the axial range of the shear-off gate 45.

By figure 7 a shear-off gate with only one cut out is disclosed. By such a shear-off gate it is possible to provide a large slip angle without disengagement of the torque limiting coupling. For providing a large slip area, wherein the torque limiting coupling is not engaged, the shear-off tubes have to be arranged with only few degrees distance in circumferential direction.

If only slip in both direction will take place, the shear-off tubes will positioned in the middle of the cut 47, 49 out as a starting position. In the case only slip in one direction will take place, the shear-off tube is positioned in maximum distance from the shear-off edge as starting position.

Figure 8 discloses a driveline 1 comprising torque limiting coupling 7. The driveline 1 comprises a power unit 3 for driving an input shaft 4 rotationally. The input shaft 4 is connected with a torque limiting coupling 7. By the torque limiting coupling 7 torque is transferrable to an output shaft 8. The output shaft 8 is connected with a load 5. In this embodiment the torque limiting coupling 7 comprises a sensor system 61. An encoder 67 is arranged on the input side. This encoder 67 is an impulse generator. This encoder 67 is read out by a detector 65. The signals read out by the detector 65 on the input side are transferred to a controller 100. In the shown embodiment there is a data line between the detector 65 on the input side and the controller 100, but a wireless connection is also possible. The encoder 67 and the detector 65 on the input side are parts of a sensor 63 of the input side. A further encoder 77 is arranged on the output side of the torque limiting coupling 7. A detector 75 is assigned to this encoder 77 on the output side. The encoder 77 and the detector 75 are parts of a sensor 73 of the output side of the torque limiting coupling 7 to measure the rotational speed of the output shaft 8. The signals of the sensor 73 of the output side are transferred to the controller 100.

The controller 100 determines the angle position of the input shaft 4 of the torque limiting coupling 7 based on the signals of the first sensor 63. Further the controller 100 determines the angle position of the output shaft 8 of the torque limiting coupling 7. The angle positions of the input shaft 4 and the output shaft 8 of the torque limiting coupling 7 are determined for equal instants of time. For determination of a slippage of the torque limiting coupling 7, the difference of the determined angle positions at an instant of time detected by the sensor 63 of the input side and the sensor 73 of the output side is determined. A determined difference correlates to a slippage within the torque limiting coupling 7. By storing the slipping angles over the time and the slipping direction, the slipping events and slippage duration can be analyzed. Small slip events can be determined and long slip events can be determined. In dependence of the determined slip events, frequency and duration, trigger signals could be sent out. It is possible to determine service intervals under respect of the determined slipping events especially under respect of the sum of slip angle in one direction to avoid a release of the torque limiting coupling 7. Further it is possible to reduce the torque provided by the power unit 3 to avoid further slippage or to adapt the load 5 to avoid further slipping. Especially this can be done as long as a reset of the torque limiting coupling has not taken place to avoid a release of the torque limiting coupling 7.

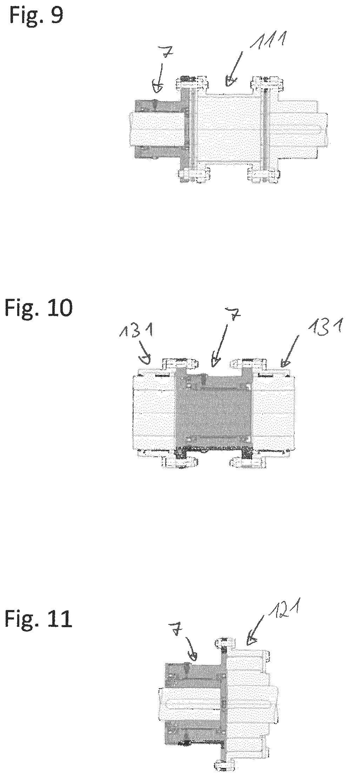

Figure 9 discloses the use of the torque limiting coupling 7 in serial arrangement with a lamella coupling 111. In figure 10 an arrangement of the torque limiting coupling 7 between two gear coupling halves 131 is shown. Figures 11 shows the torque limiting coupling 7 in serial arrangement with a flexible coupling 121.

**REFERENCE LIST**

| | |
|---|---|
| 1 | driveline |
| 3 | power unit |
| 4 | input shaft |
| 5 | load |
| 7 | torque limiting coupling |
| 8 | output shaft |
| 11 | shaft |
| 13 | hollow shaft |
| 15 | flange input side |
| 17 | flange output side |
| 21 | frictional surface outside |
| 23 | twin walled sleeve |
| 25 | frictional surface inside |
| 27 | fluid chamber |
| 29 | bearing |
| 31 | sealing |
| 33 | cap |
| 35 | release mechanism |
| 36 | unblocked position |
| 37 | shear-off tube |
| 38 | blocked position |
| 39 | lubrication connector |
| 41 | pump connection seat |
| 45 | shear-off gate |
| 46 | screw |
| 47 | 1^{st} cut-out |
| 49 | 2^{nd} cut-out |
| 51 | first/clockwise cutting edge, first/clockwise shear-off edge |
| 53 | second /anti-clockwise cutting edge, second/anti-clockwise shear-off edge |
| 61 | sensor system |
| 63 | sensor input side |
| 65 | detector input shaft |
| 67 | encoder output shaft |
| 73 | sensor output side |
| 75 | detector output shaft |
| 77 | encoder output shaft |
| 91 | radial direction |
| 93 | circumferential direction |
| 95 | axial direction |
| 100 | controller |
| 111 | lamella coupling |
| 121 | flexible coupling |
| 131 | gear coupling halves |

## Claims

1. Torque limiting coupling (7) for a driveline (1) comprising a fluid chamber (27) within a twin walled sleeve (23) to provide a fictional engagement to a shaft (11), wherein a shear-off tube (37) is in fluid connection to the fluid chamber (27) and is assigned to a shear-off gate (45),wherein the shear-off gate is fixedly connected to the shaft to open the fluid chamber (27) by shearing the shear-off tube (37) with the shear-off gate (45),
**characterized in that**,
at least a first shear-off tube (37) and second shear-off tube (37) are arranged for closure of the fluid chamber (27) and for interaction with shear-off gate (45) and the shear-off gate (45) provides at least one cut-off edge (51,53), wherein at a position of blockage (38) of one of the shear-off tubes (37) by one cut-off edge (51, 53), the other shear-off tube (37) is positioned at an unblocked position in respect of the shear-off gate (45).

2. Torque limiting coupling (7) of claim 1,
**characterized in that**,
the shear-off gate (45) comprises at least one cut-out (47, 49) providing a first cut-off edge (51) for release of the torque limiting coupling in case of slipping in first clockwise direction and a left cut-off edge (53) for release of the torque limiting coupling in the case of an slipping in second anti-clockwise direction, wherein every cut-off edge (51, 53) is assigned to at least one shear-off tube (37).

3. Torque limiting coupling of one of the previous claims,
**characterized in that**,
the shear-off gate (45) comprises a first cut-out (47) and a second cut-out (49), wherein the first cut-out (47) is provided for arrangement of the first shear-off tube (37) within the cut-out (47) and the second cut-out (49) is provided for arrangement of the second shear-off tube (37) within the second cut-out (49).

4. Torque limiting coupling of claim 3,
**characterized in that**,
the first cut-out (47) and the second cut-out (49) of the shear-off gate (45) are arranged asymmetrically in respect to the shear-off tube (37) arranged within that cut-outs (47, 49).

5. Torque limiting coupling of one of the previous claims,
**characterized in that**,
the cut-outs (47, 49) of the shear-off gate (45) have the same extension in circumferential direction.

6. Torque limiting coupling of one of the previous claims 1 to 4,
**characterized in that**,
the second cut-out (49) of the shear-off gate (45) has an larger extension in circumferential direction in comparison with the first cut-out (47).

7. Torque limiting coupling of one of the previous claims 1 to 4,
**characterized in that**,
the first and the second shear off tube (37) are arranged in one cut-out (47) of the shear-off gate, wherein the first and second shear-off tube (37) are arranged with a distance in circumferential direction.

8. Torque limiting coupling of one of the previous claims,
**characterized in that**,
the first and the second shear-off edge (51, 53) of one cut-out (47, 49) of the shear-off gate (45) are arranged in a circumferential distance of at least 10 degrees, preferably of at least 45 degrees.

9. Torque limiting coupling of one of the previous claims,
**characterized in that**,
the first and second shear-off tube (37) are connected to at least one pump connection seat (41), wherein the pump connection seat (41) is arranged in an axial distance within the twin walled sleeve (23) to be axial outside of the shear-off gate (45).

10. Torque limiting coupling of one of the previous claims 1 to 8,
**characterized in that**,
a pump connection seat (41) is arranged on the far side of the shear-off tube in respect to the shear-off edge (51, 53) of the cut out (47, 49).

11. Torque limiting coupling of one of the previous claims,
**characterized in that**
the coupling comprises a sensor system (61) to provide information about slip events in the range of degrees and preferable to provide the sum of slip angle in every circumferential direction.

12. Driveline comprising a power unit (3), a load (5) and a torque limiting coupling (7) of one of the previous claims.

13. Driveline of claim 12,
**characterized in that**,
a controller (100) is assigned to the driveline (1), wherein the load (5) and the power unit (3) is controllable under respect of determined slippage of the torque limiting coupling (7).

14. Service method of a torque limiting coupling (7) of one of the previous claims 1 to 11, wherein for an adjustment of the pressure or an exchange of fluid the unblocked shear-off tube (37) is loosed for providing a fluid connection to the fluid chamber (27), preferable from the pump connection seat (41).

15. Method for usage of a torque limiting coupling (3) within a driveline of claims 13,
**characterized in that**
the controller (100) calculates a slip angle position and triggers a signal of needed resetting if a predetermined maximum slip angle is reached.
